# EUROPÄISCHE PATENTSCHRIFT

(11) **EP 2 373 536 B1**
(45) Veröffentlichungstag und Bekanntmachung des Hinweises auf die Patenterteilung: **20.12.2023**
(21) Anmeldenummer: 09799005.5
(22) Anmeldetag: 29.09.2009
(51) Int. Cl.: B62J 7/08, A45C 13/00, B62J 9/00, A45C 13/10

(54) **BEFESTIGUNGSSYSTEM FÜR TASCHEN ODER BEHÄLTER**
FASTENING SYSTEM FOR BAGS OR CONTAINERS
SYSTÈME DE FIXATION POUR SACHET OU RÉSERVOIR

(30) Priorität: 07.10.2008 DE 202008013186 U; 29.09.2008 DE 202008012899 U; 29.09.2008 DE 202008012898 U
(43) Veröffentlichungstag der Anmeldung: 12.10.2011
(73) Patentinhaber: Ortlieb, Hartmut, 91560 Heilsbronn (DE)
(72) Erfinder: Ortlieb, Hartmut, 91560 Heilsbronn (DE)
(74) Vertreter: Schuhmann, Albrecht
(86) Internationale Anmeldenummer: PCT/DE2009/001354
(87) Internationale Veröffentlichungsnummer: WO 2010/034303

(56) Entgegenhaltungen:
- DE-A1- 4 041 460
- DE-U1-202006 017 966
- US-A- 5 579 971

## Beschreibung

Die vorliegende Erfindung betrifft eine Befestigungsschiene bzw. ein Befestigungssystem für Taschen oder Behälter, insbesondere für Packtaschen zum Anbringen an einer Haltevorrichtung wie einem Gepäckträger oder dergleichen Packtaschen für Fahrräder und insbesondere zum Anbringen an Gepäckträgern sind in zahlreichen Varianten auf dem Markt. Diese verfügen meist über Haltevorrichtungen, wie z.B. Hacken oder Riemen, welche an den Taschen angenäht oder anders befestigt sind, mittels welcher diese an der oberen Strebe des Gepäckträgers angebracht werden.

Viele Ausführungen mit weichen Taschen hängen damit am Gepäckträger "schlapp" herunter und baumeln unkontrolliert herum und können leicht in die Speichen oder in die Kette gelangen oder in Richtung nach außen an Gegenständen streifen oder gar hängen bleiben.

Packtaschen mit einer besseren Formgebung sind dagegen meistens sehr schwer und werden demzufolge ungern an Fahrrädern montiert, da dadurch eine erhöhte körperlicher Anstrengung bedingt ist.

Als weiterer Nachteil bei bekannten Packtaschen hat sich gezeigt, dass die Fläche des Gepäckträgers meist nicht mehr nutzbar ist, da die seitlichen Pachtaschen, welche mit den Befestigungsmitteln an der oberen Strebe des Gepäckträgers angebracht sind, über die Gepäckträgerfläche hinausragen. Meist werden Packtaschen beim Fahren auch als hinderlich oder unangenehm empfunden da sich mit diesen, insbesondere wenn sie falsch beladen werden ein etwas schwammigeres Fahrverhalten einstellt was viele Radfahrer verunsichert.

US 5,579,971 offenbart eine als nächstliegender Stand der Technik betrachtete Befestigungsschiene bzw. Befestigungssystem für Taschen oder Behälter mit einer mechanischen Aufnahme mit wenigstens einer Verriegelung.

Aufgabe der vorliegenden Erfindung ist es daher, eine Tasche auszubilden, welche die genannten Nachteile möglichst nicht aufweist und über verbesserte Handlingeigenschaften verfügt.

Diese Aufgabe wird mit den Merkmalen des Anspruchs 1 gelöst. Fortbildungen und vorteilhafte Ausführungen der Erfindung sind in den weiteren Ansprüchen umfasst.

Vorgesehen ist eine Befestigungsschiene bzw. Befestigungssystem für Taschen oder Behälter, insbesondere für Packtaschen zum Anbringen an einer Haltevorrichtung wie einem Gepäckträger oder dergleichen, wobei die Befestigungsschiene mit einer Tasche oder einem Behälter verbunden ist und über wenigstens eine mechanische Aufnahme mit wenigstens einer Verriegelung für ein Gegenstück an einer Haltevorrichtung verfügt, wobei die Verriegelung als ein seitlich einschwenkender Haken zwischen der wenigstens einen Aufnahme und dem wenigstens einem Gegenstück ausgeführt ist.

Die Befestigungsschiene bzw. das Befestigungssystem für Taschen oder Behälter, insbesondere für Packtaschen zum Anbringen an einer Haltevorrichtung wie einem Gepäckträger oder dergleichen, wobei die Befestigungsschiene wasserdicht auf der Außenseite mit der Tasche oder dem Behälter verbunden ist und die Tasche mit einem zusätzlichen Versteifungsmittel im Bereich der Befestigungsschiene ausgerüstet ist.

Das Versteifungsmittel ist dabei bevorzugt auf der Innenseite der Tasche oder des Behälters im Bereich der äußeren Befestigungsschiene angebracht und mit dieser bevorzugt mechanisch verbunden, wie verschraubt oder vernietet. Die Befestigungsschiene ist bevorzugt auf die Rückwand der Tasche bzw. der Seite der Tasche, mit welcher diese an z.B. einem Gepäckträger befestigt werden soll, aufgeschweißt, insbesondere in der Ausführung für wasserdichte Taschen oder Behälter.

Die an der Tasche oder dem Behälter angebrachte Befestigungsschiene verfügt über wenigstens eine mechanische Aufnahme für ein Gegenstück welches an z.B. einem Gepäckträger angebracht ist und in welches die Aufnahme der Befestigungsschiene eingreift.

Die Tasche wird dabei von oben über dem Gepäckträger, bzw. über die am Gepäckträger angebrachten Gegenstücke abgesenkt und die Aufnahmen an der Befestigungsschiene werden dabei über die Gegenstücke abgesenkt.

Dabei sind die am Gepäckträger angebrachten Gegenstücke kreisrunde Aufnahmenoppen mit einem größeren äußeren Durchmesser, welche beim Absenken der Tasche in die Aufnahmen der Befestigungsschiene der Tasche hineingleiten und in den dafür vorgesehen Ausbuchtungen aufliegen. Die Befestigungsschiene verfügt nach einer Ausführung im Bereich der vorgesehenen Ausbuchtungen über Auskragungen an der Schiene, mittels welcher das Einführen erleichtert wird, da diese mit einer Anlaufschräge in Richtung der Ausbuchtung ausgerüstet sind. Die Schiene ist dafür an den Stellen an welchen derartige Haltepunkte vorgesehen sind mit Auskragungen ausgerüstet, an welchen die Anlaufschrägen ausgeführt sind. Grundsätzlich können mehrerer solche Auskragungen und Aufnahmen in der Befestigungsschiene vorgesehen sein, wobei auch Ausfertigungen mit Aufnahmen unterschiedlicher Größen verwendet werden können um z.B. an Gepäckträgern Taschen unterschiedlicher Gewichte an entsprechend dimensionierten Haltepunkten befestigen zu können.

Die Aufnahme in der Befestigungsschiene kann nach einer alternativen Ausführung auch als Nut ausgeführt werden, in welche eine an dem Gepäckträger entsprechend angebrachte Schiene eingreift, an welcher die Tasche aufgehängt wird.

Die Befestigungsschiene verfügt über wenigstens eine Verriegelungseinheit, mittels welcher das am Gepäckträger angebrachte Gegenstück in der Aufnahmevorrichtung gehalten wird, bzw. gegen unbeabsichtigtes Herausgleiten oder Herausspringen gesichert ist.

Dies wird mit einem, bevorzugt mit einer Federkraft beaufschlagtem und erfindungsgemäß an einem Drehpunkt angebrachten Schwenkhaken gelöst, welcher den Haltepunkt des Gepäckträgers nach dem Einführen in die Ausbuchtung an der Befestigungsschiene verriegelt, bzw. diesen fixiert. Der Verriegelungshaken ist dabei als seitlich zwischen den Verschlusstegen einschwenkender Haken ausgeführt, welcher in die Befestigungsschiene integriert ist, bzw. von hinten in diese montiert ist. Durch diese Anbringung behält die Befestigungsschiene ihre äußere, dem Gepäckträcker zugewandte glatte Fläche und der Hacken gleitet, bzw. schwenkt hinter dieser Fläche zwischen den Stegen zwischen der Aufnahme für das Haltelement entlang.

Der Haken ist mit einem Bedienelement ausgerüstet, welches es erlaubt, diesen seitlich zu verschwenken und somit die Aufnahme in der Befestigungsschiene für ein Haltelement an einem Gepäckträger zu öffnen oder zu verriegeln. Das Bedienteil ist nach der bevorzugten Ausführung als Tragegriff der Tasche ausgeführt oder als zusätzliches Element wie ein Gurtband oder ein Seil bzw. Drahtseil an der Tasche angebracht.

Die Tasche ist mit der im oberen Bereich, entlang der äußeren Befestigungsschiene, im Inneren angebrachten Versteifung, relativ stabil und kann zusätzlich in ihrem unteren Bereich mit einem zusätzlichen Halteelement ausgeführt sein, mittels welchem die Tasche im Bereich des Hinterrades am Fahradrahmen oder am Gepäckträger zusätzlich befestigt werden kann. Durch die mechanische Verbindung der Befestigungsschiene auf der äußeren Seite der Tasche mit der z.B. als Leiste oder Platte ausgeführten Versteifung, welche im Bereich über den Aufnahmeausbuchtungen auf der Befestigungsleiste erfolgt, ist auch die Tasche komplett hängend an der Schiene angebracht.

Im Folgenden wird die Erfindung anhand von Zeichnungen beispielhaft näher beschrieben, dabei zeigen:
Fig.1 eine Draufsicht einer Befestigungsschiene vor Anbringung
Fig. 2 eine perspektivische Darstellung einer Befestigungsschiene vor Anbringung
Fig. 3 eine Draufsicht einer Befestigungsschiene nach Anbringung
Fig. 4 eine perspektivische Darstellung einer Befestigungsschiene nach Anbringung

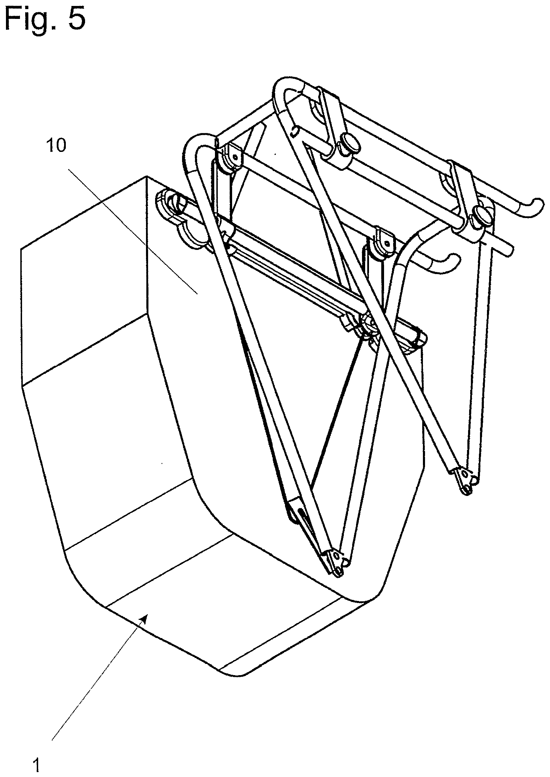

Fig. 5. Eine perspektivische Darstellung eines Gepäckträgers mit Tasche

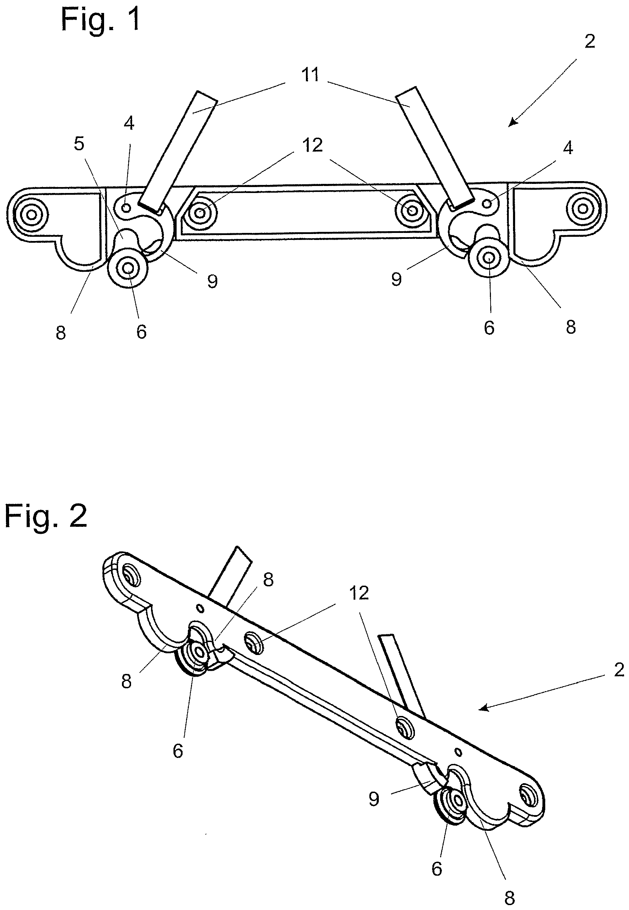

In Fig. 1 und Fig. 2 ist eine Befestigungsschiene 2 gezeigt, welche kurz vor der Anbringung an einem Halteelement steht. Die Aufnahmevorrichtungen 5 in der hier gezeigten Ausführung mit zwei Verbindungsstellen werden über die Gegenstücke, bzw. Aufnahmeelemente 6 an einem Gepäckträger geführt.

Man sieht deutlich die Abkragungen 8 welche von der Schiene abgehen und welche mit ihren Anlaufschrägen eine gute Einführhilfe für die Haltelemente 6 bilden. In der hier gezeigten Abbildung sind die schwenkbaren Verschlusshaken 9 geöffnet und das Haltelement 6 kann in die Aufnahme 5 eingeführt werden. Im Drehpunkt 4 ist eine Feder vorgesehen, welche den Haken 9 einschwenken lässt, was hier durch den nach innen gerichteten Zug an den Bedienelementen 11 verhindert wird, d.h. die Verriegelung wird mit den Bedienelementen 11, welche den Griff der Tasche bilden geöffnet.

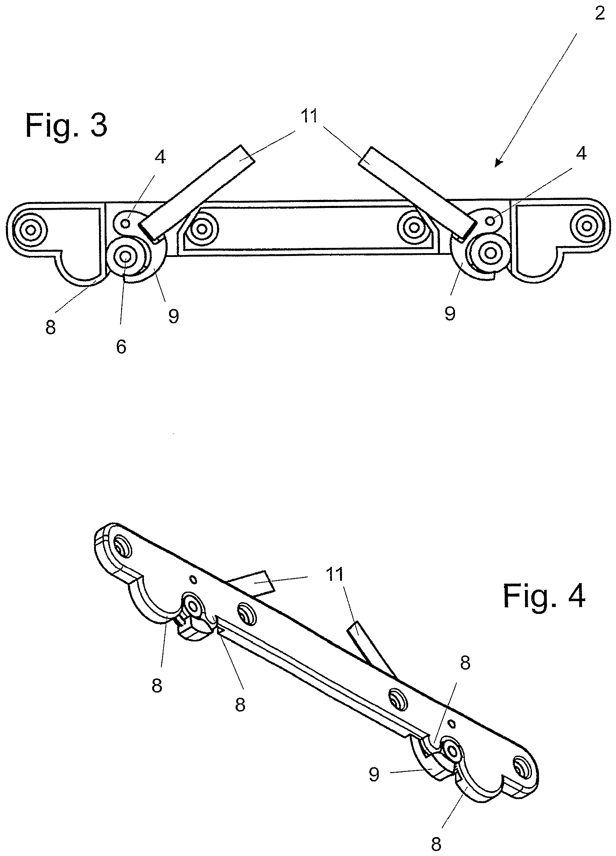

In Fig. 3 und Fig. 4 hingegen ist eine Befestigungsschiene 2 gezeigt, welche bereits mit den Haltepunkten 6 eines Gepäckträgers verbunden ist. Die Riegel 9 sind aufgrund der Federkraft im Drehpunkt 4 eingeschwenkt und verhindern ein Herausgleiten der Haltepunkte 6 aus den Aufnahmen 5 zwischen den Rasterhöhungen 8. Die Bedienteile 11 sind, wie zu sehen entspannt nach innen gerichtet und es wird nicht an ihnen gezogen.

Fig. 3 zeigt eine Anbringung der Tasche an einem Gepäckträger.

Nachdem bevorzugte Ausführungen der Erfindung in Bezug auf die beiliegenden Zeichnungen beschrieben wurden, ist festzuhalten, dass die Erfindung nicht auf diese genauen Ausführungen beschränkt ist und dass verschiedene Änderungen und Modifizierungen daran von einem Fachmann ausgeführt werden können, ohne dass vom Umfang der Erfindung, wie er in den beiliegenden Ansprüchen definiert ist abgewichen wird.

## Patentansprüche

1. Befestigungsschiene bzw. Befestigungssystem für Taschen oder Behälter, insbesondere für Packtaschen zum Anbringen an einer Haltevorrichtung wie einem Gepäckträger oder dergleichen, wobei die Befestigungsschiene (2) mit einer Tasche (1) oder einem Behälter verbunden ist und über wenigstens eine, als Ausbuchtung oder Nut in der Befestigungsschiene selbst ausgebildete, mechanische Aufnahme (5) mit wenigstens einer Verriegelung (9) für als Aufnahmenoppen mit einem größeren äußeren Durchmesser ausgeführte Gegenstücke (6) an einer Haltevorrichtung verfügt in welches die Aufnahme der Befestigungsschiene eingreift, wobei die Verriegelung (9) als ein seitlich einschwenkender, an einem Drehpunkt (4) angebrachter, auf einer parallelen Ebene zur Befestigungsschiene über die Ausbuchtung oder Nut schwenkender, in die Befestigungsschiene integrierter oder an diese montierter Haken zwischen der wenigstens einen Aufnahme (5) und dem wenigstens einem Gegenstück (6) ausgeführt ist.

2. Befestigungsschiene bzw. Befestigungssystem nach Anspruch 1,
**dadurch gekennzeichnet,**
**dass** die Befestigungsschiene (2) mit zwei mechanischen Aufnahmen (5) mit Verriegelungen (9) für Gegenstücke (6) an einer Haltevorrichtung ausgeführt ist.

3. Befestigungsschiene bzw. Befestigungssystem nach Anspruch 1,
**dadurch gekennzeichnet,**
**dass** die Verriegelung (9) mit einem Federelement beaufschlagt ist.

4. Befestigungsschiene bzw. Befestigungssystem nach Anspruch 1,
**dadurch gekennzeichnet,**
**dass** die mechanische Aufnahme für ein Gegenstück (6) mit einer Einführhilfe (7) ausgerüstet ist.

5. Befestigungsschiene bzw. Befestigungssystem nach Anspruch 4,
**dadurch gekennzeichnet,**
**dass** die Einführhilfe (7) als Anlaufschräge ausgeführt ist.

6. Befestigungsschiene bzw. Befestigungssystem nach Anspruch 4,
**dadurch gekennzeichnet,**
**dass** die Einführhilfe (7) als Anlaufschräge zwischen Rastauskragungen (8) der Befestigungsschiene (2) ausgeführt ist.

7. Befestigungsschiene nach Anspruch 1 und 6,
**dadurch gekennzeichnet,**
**dass** der Verschlusshaken (9) hinter den vorderen Kanten der Rastauskragungen (8) verläuft.

8. Befestigungsschiene für Taschen oder Behälter nach Anspruch 1,
**dadurch gekennzeichnet,**
**dass** die Tasche (1) oder der Behälter über Mittel (11) verfügt die Verriegelung (9) des mindestens einen Gegenstücks (6) zu Verriegeln oder zu Entriegeln.

9. Befestigungsschiene für Taschen oder Behälter nach vorgenannten Ansprüchen,
**dadurch gekennzeichnet,**
**dass** der Tragegriff der Tasche (1) oder des Behälters als Bedienteil für das Mittel (11) zum Entriegeln oder Verriegeln des mindestens einen Gegenstückes(6) ausgeführt ist.

10. Befestigungsschiene für Taschen oder Behälter nach vorgenannten Ansprüchen,
**dadurch gekennzeichnet,**
**dass** eine Handhabe wie der Tragegriff der Tasche als verbundenes Entriegelungselement für zwei Gegenstücke ausgeführt ist.

11. Befestigungsschiene für Taschen oder Behälter nach Anspruch 1,
**dadurch gekennzeichnet,**
**dass** die Befestigungsschiene (2) wasserdicht auf der Außenseite mit der Tasche (1) oder dem Behälter verbunden ist und die Tasche mit einem zusätzlichen Versteifungsmittel im Bereich der Befestigungsschiene ausgerüstet ist.

12. Befestigungsschiene für Taschen oder Behälter nach Anspruch 1 und 11,
**dadurch gekennzeichnet,**
**dass** das Versteifungsmittel auf der Innenseite der Tasche (1) im Bereich der Befestigungsschiene (2) angeordnet ist.

13. Befestigungsschiene für Taschen oder Behälter nach Anspruch 1,
**dadurch gekennzeichnet,**
**dass** die Befestigungsschiene (2) auf die Tasche (1) oder den Behälter aufgeschweißt ist.

14. Befestigungsschiene für Taschen oder Behälter nach Anspruch 1,
**dadurch gekennzeichnet,**
**dass** die Tasche (1) als Packtasche mit an der äußeren Rückwand (10) angebrachter Befestigungsschiene (2), mit einer im Inneren der Tasche im Bereich der Befestigungsschiene (2) angebrachten mechanischen Versteifung für die Tasche, ausgeführt ist und über eine untere Befestigungsstelle (3) an der Rückwand verfügt.

15. Befestigungsschiene für Taschen oder Behälter nach Anspruch 1 und 14,
**dadurch gekennzeichnet,**
**dass** die Versteifung im Inneren der Tasche (1) im Bereich der Befestigungsschiene (2) als Leiste ausgeführt ist.

16. Befestigungsschiene für Taschen oder Behälter nach nach Anspruch 1 und 14,
**dadurch gekennzeichnet,**
**dass** die Versteifung im Inneren der Tasche (1) im Bereich der Befestigungsschiene (2) als Platte ausgeführt ist.

## Claims

1. A mounting rail or mounting system for bags or containers, in particular for packing bags to be secured to a holding device, such as a luggage rack or the like, wherein the mounting rail (2) is connected with a bag (1) or a container, and has at least one mechanical receptacle (5) designed as a bulge or groove in the mounting rail itself with at least one latch (9) for counter-pieces (6) designed as receiving knobs with a larger outer diameter on a holding device into which the receptacle of the mounting rail engages, wherein the latch (9) is designed as a laterally inwardly swiveling hook between the at least one receptacle (5) and the at least one counter-piece (6), wherein said hook is secured to a pivot point (4), swivels on a parallel plane to the mounting rail over the bulge or groove, and is integrated into the mounting rail or mounted thereon.

2. The mounting rail or mounting system according to claim 1,
**characterized in that**
the mounting rail (2) is designed with two mechanical receptacles (5) with latches (9) for counter-pieces (6) on a holding device.

3. The mounting rail or mounting system according to claim 1,
**characterized in that**
the latch (9) is loaded with a spring element.

4. The mounting rail or mounting system according to claim 1,
**characterized in that**
the mechanical receptacle is equipped for a counter-piece (6) with an insertion aid (7).

5. The mounting rail or mounting system according to claim 4,
**characterized in that**
the insertion aid (7) is designed as an approach slope.

6. The mounting rail or mounting system according to claim 4,
**characterized in that**
the insertion aid (7) is designed as an approach slope between detent projections (8) of the mounting rail (2) .

7. The mounting rail according to claim 1 and 6,
**characterized in that**
the closing hook (9) runs behind the front edges of the detent projections (8).

8. The mounting rail for bags or containers according to claim 1,
**characterized in that**
the bag (1) or the container has means (11) for locking or unlocking the latch (9) of the at least one counter-piece (6).

9. The mounting rail for bags or containers according to the aforementioned claims,
**characterized in that**
the handle of the bag (1) or the container is designed as an operating element for the means (11) for unlocking or locking the at least one counter-piece (6).

10. The mounting rail for bags or containers according to the aforementioned claims,
**characterized in that**
the grip is designed as a connected unlocking element for two counter-pieces, just like the handle.

11. The mounting rail for bags or containers according to claim 1,
**characterized in that**
the mounting rail (2) is connected watertight with the bag (1) or the container on the exterior side, and the bag is equipped with an additional stiffener in the area of the mounting rail.

12. The mounting rail for bags or containers according to claim 1 and 11,
**characterized in that**
the stiffener is arranged on the interior side of the bag (1) in the area of the mounting rail (2).

13. The mounting rail for bags or containers according to claim 1,
**characterized in that**
the mounting rail (2) is welded onto the bag (1) or the container.

14. The mounting rail for bags or containers according to claim 1,
**characterized in that**
the bag (1) is designed as a packing bag with a mounting rail (2) secured to the outer rear wall (10), with a mechanical stiffener for the bag secured inside of the bag in the area of the mounting rail (2), and has a lower mounting point (3) on the rear wall.

15. The mounting rail for bags or containers according to claim 1 and 14,
**characterized in that**
the stiffener inside of the bag (1) is designed as a strip in the area of the mounting rail (2).

16. The mounting rail for bags or containers according to claim 1 and 14,
**characterized in that**
the stiffener inside of the bag (1) is designed as a plate in the area of the mounting rail (2).

## Revendications

1. Rail de fixation ou système de fixation pour sacoches ou conteneurs, en particulier pour sacoches de rangement à monter sur un dispositif de maintien comme un porte-bagages ou systèmes analogues, sachant que le rail de fixation (2) est relié à une sacoche (1) ou un conteneur et dispose d'au moins un logement (5) mécanique constitué lui-même sous la forme d'une convexité ou d'une rainure dans le rail de fixation avec au moins un verrouillage (9) pour des contre-pièces (6) sur un dispositif de maintien exécutées sous la forme de tétons de logement avec un diamètre extérieur plus grand, dans lequel vient en prise le logement du rail de fixation, sachant que le verrouillage (9) est exécuté sous la forme d'un crochet basculant latéralement, placé sur un point de rotation (4), pivotant sur un plan parallèle par rapport au rail de fixation sur la convexité ou la rainure, intégré dans le rail de fixation ou monté sur celui-ci entre au moins un logement (5) et au moins une contre-pièce (6).

2. Rail de fixation ou système de fixation selon la revendication 1,
**caractérisé en ce que**
le rail de fixation (2) est exécuté avec deux logements mécaniques (5) avec des verrouillages (9) pour contre-pièces (6) sur un dispositif de maintien.

3. Rail de fixation ou système de fixation selon la revendication 1,
**caractérisé en ce que**
le verrouillage (9) peut être sollicité par un élément à ressort.

4. Rail de fixation ou système de fixation selon la revendication 1,
**caractérisé en ce que**
le logement mécanique pour une contre-pièce (6) est équipé d'une assistance d'introduction (7).

5. Rail de fixation ou système de fixation selon la revendication 4,
**caractérisé en ce que**
l'assistance d'introduction (7) est exécutée sous la forme d'un chanfrein de butée.

6. Rail de fixation ou système de fixation selon la revendication 4,
**caractérisé en ce que**
l'assistance d'introduction (7) est exécutée sous la forme d'un chanfrein de butée entre les saillies d'enclenchement (8) du rail de fixation (2).

7. Rail de fixation selon les revendications 1 et 6,
**caractérisé en ce que**
les crochets de fermeture (9) passent derrière les bords avant des saillies d'enclenchement (8).

8. Rail de fixation pour sacoches ou conteneurs selon la revendication 1, **caractérisé en ce que**
la sacoche (1) ou le conteneur dispose de moyens (11) pour verrouiller ou déverrouiller le verrouillage (9) d'au moins une contre-pièce (6).

9. Rail de fixation pour sacoches ou conteneurs selon les revendications précédentes,
**caractérisé en ce que**
la poignée de transport de la sacoche (1) ou du conteneur est exécutée sous la forme d'un élément de commande pour le moyen (11) pour déverrouiller ou verrouiller au moins une contre-pièce (6).

10. Rail de fixation pour sacoches ou conteneurs selon les revendications précédentes,
**caractérisé en ce qu'**
une manette comme la poignée de transport de la sacoche est exécutée sous la forme d'un élément de déverrouillage associé pour deux contre-pièces.

11. Rail de fixation pour sacoches ou conteneurs selon la revendication 1,
**caractérisé en ce que**
le rail de fixation (2) est relié de façon étanche à l'eau sur le côté extérieur à la sacoche (1) ou au conteneur et la sacoche est dotée d'un moyen de renfort supplémentaire dans la zone du rail de fixation.

12. Rail de fixation pour sacoches ou conteneurs selon les revendications 1 et 11,
**caractérisé en ce que**
le moyen de renfort est disposé sur la face intérieure de la sacoche (1) dans la zone du rail de fixation (2).

13. Rail de fixation pour sacoches ou conteneurs selon la revendication 1,
**caractérisé en ce que**
le rail de fixation (2) est soudé sur la sacoche (1) ou le conteneur.

14. Rail de fixation pour sacoches ou conteneurs selon la revendication 1
**caractérisé en ce que**
la sacoche (1) est exécutée sous la forme d'une sacoche de rangement avec un rail de fixation (2) placé sur la paroi arrière extérieure (10) avec un renfort mécanique pour la sacoche placé à l'intérieur de la sacoche dans la zone du rail de fixation (2) et dispose d'un point de fixation inférieur (3) sur la paroi arrière.

15. Rail de fixation pour sacoches ou conteneurs selon les revendications 1 et 14,
**caractérisé en ce que**
le renfort à l'intérieur de la sacoche (1) dans la zone du rail de fixation (2) est exécuté sous la forme d'un listeau.

16. Rail de fixation pour sacoches ou conteneurs selon les revendications 1 et 14,
**caractérisé en ce que**
le renfort à l'intérieur de la sacoche (1) dans la zone du rail de fixation (2) est exécuté sous la forme d'une plaque.
